Europäisches Patentamt

European Patent Office

Office européen des brevets

(19)

(11) Veröffentlichungsnummer: **0 253 071**
**A2**

(12) # EUROPÄISCHE PATENTANMELDUNG

(21) Anmeldenummer: **87105693.3**

(51) Int. Cl.⁴: **D 01 G 15/88**

(22) Anmeldetag: **16.04.87**

(30) Priorität: **18.07.86 DE 3624292**

(43) Veröffentlichungstag der Anmeldung: **20.01.88**
**Patentblatt 88/3**

(84) Benannte Vertragsstaaten: **AT BE CH DE ES FR GB GR IT LI LU NL SE**

(71) Anmelder: **Staedtler & Uhl, Nördliche Ringstrasse 12, D-8540 Schwabach (DE)**

(72) Erfinder: **Egerer, Josef, Beim Biemgarten 2b, D-8540 Schwabach (DE)**

(74) Vertreter: **Schneck, Herbert, Dipl.-Phys., Dr. et al, Rau & Schneck Patentanwälte Königstrasse 2, D-8500 Nürnberg 1 (DE)**

(54) Vorrichtung zur Befestigung von Sägezahnstanzteilen auf einem Tragekörper einer textilen Vorbereitungsmaschine.

(57) Bei einer Vorrichtung zur Befestigung einer Mehrzahl unter Ausbildung eines Riegels nebeneinander angeordneter Sägezahnstanzteile auf einem Tragekörper einer textilen Vorbereitungsmaschine, wie Karden, Kratzen, Kämmwalzen od.dgl., wobei die Sägezahnstanzteile in Richtung senkrecht zur Längsrichtung des Riegels dadurch festgelegt sind, daß wenigstens ein in Längsrichtung des Riegels verlaufendes, mit dem Tragekörper verbundenes profiliertes Halteteil in eine korrespondierend profilierte Ausnehmung in einem Fußteil jedes Sägezahnstanzteiles eingreift, ist zur Erzielung einer leicht lösbaren und gleichwohl sicheren Befestigung in Längsrichtung jedes Riegels und in Richtung senkrecht zu dem Tragkörper vorgesehen, daß das Halteteil (3) wenigstens einen Federschenkel (5, 10, 12, 19, 22, 25) derart aufweist, daß dieser beim Einsetzen in die Sägezahnstanzteile (1) bzw. in den Tragekörper (4) elastisch deformiert wird.

0253071

Vorrichtung zur Befestigung von Sägezahnstanzteilen
auf einem Tragekörper einer textilen
Vorbereitungsmaschine

---

Die Erfindung richtet sich auf eine Vorrichtung zur
Befestigung einer Mehrzahl unter Ausbildung eines
Riegels nebeneinander angeordneter Sägezahnstanzteile
auf einem Tragekörper einer textilen Vorbereitungsmaschine, wie Karden, Kratzen, Krempel, Kämmwalzen
und dgl., wobei die Sägezahnstanzteile in Richtung
senkrecht zur Längsrichtung des Riegels dadurch festgelegt sind, daß wenigstens ein in Längsrichtung des
Riegels verlaufendes, mit dem Tragekörper verbundenes,
profiliertes Halteteil in eine korrespondierend profilierte Ausnehmung in einem Fußteil jedes Sägezahnstanzteiles eingreift.

Eine derartige Vorrichtung ist z.B. aus der DE-PS
3o o7 245 bekannt. Dabei sind dort die Ausnehmungen
in den Sägezahnstanzteilen schwalbenschwanzförmig
ausgebildet und in diese Ausnehmungen greifen ebenfalls schwalbenschwanzförmige, stangenartige Halteteile ein. Die Sägezahnsegmente werden samt der Halteteile über Schrauben und Gewindebohrungen in den Halteteilen am Grundkörper festgelegt. Die Sägezahnstanzteile werden in Längsrichtung überdies durch außen aufgesetzte Flansche befestigt.

Aus der EP-PS 91 986 ist es bekannt, in den Fußteilen der Sägezahnstanzteile von der Seite her Ausnehmungen einzubringen und in diese Ausnehmungen Halteteile einzusetzen. Diese Halteteile können einen Grundkörper formschlüssig umgreifen und auf diese Weise einen durch eine Mehrzahl von aneinandergereihten Sägezahnstanzteilen gebildeten Riegel an einem Grundkörper, der durch den Deckel einer Krempelmaschine gebildet wird, festlegen. In Längsrichtung jedes Riegels werden die Sägezahnstanzteile durch außen aufgesetzte Verriegelungsglieder festgelegt, welche durch plastische Deformation befestigt werden.

Hiervon ausgehend liegt der Erfindung die Aufgabe zugrunde, eine Vorrichtung der eingangs genannten Art so auszubilden, daß sie eine zuverlässige Festlegung von Sägezahnstanzteilen an einem Tragekörper ermöglicht, wobei durch ein und dieselbe Befestigungsvorrichtung eine Festlegung in Richtung der Längsachse jedes Riegels als auch senkrecht hierzu erzielbar sein soll. Darüber hinaus soll die Befestigung so erfolgen, daß ein leichter und schneller Austausch der Sägezahnstanzteile in ihrer Gesamtheit oder einzelner Sägezahnstanzteile möglich ist, ohne daß Werkzeuge oder speziell ausgebildete Werkzeuge verwendet werden müßten.

0253071

Diese Aufgabe wird erfindungsgemäß dadurch gelöst, daß das Halteteil wenigstens einen Federschenkel derart aufweist, daß dieser beim Einsetzen in die Sägezahnstanzteile bzw. in den Tragekörper elastisch deformiert wird. Durch diese elastische Deformation und die Federkraft des Federschenkels wird eine reversible Verklemmung mit definierter Klemmkraft erzielt. Die Klemmkraft hält die Sägezahnstanzteile zuverlässig auch in Längsrichtung der Riegel fest. Durch die erfindungsgemäße Lösung wird ein besonders leichter Austausch von Sägezahnstanzteilen ermöglicht, weil weder Klebe- noch Lötverbindungen gelöst werden müssen noch Schrauben od.dgl. betätigt zu werden brauchen.

Bei einer vorteilhaften Ausgestaltung ist das wenigstens eine Halteteil mit dem Tragekörper durch Schrauben, Kleben, Nieten od.dgl. fest verbunden. Dies bedeutet, daß das Halteteil selbst mit dem Trageteil dauerhaft verbunden ist, während die Sägezahnstanzteile dessen ungeachtet durch eine reine Klemmwirkung gegebenenfalls in Verbindung mit einer formschlüssigen Befestigung festgelegt sind.

Bei einer anderen Variante kann vorgesehen sein, daß das wenigstens eine Halteteil in eine Ausnehmung des Tragekörpers elastisch einrastbar ist. Bei dieser Ausführungsform macht man sich zunutze, daß das Halteteil ohnehin aus einem federnden Material hergestellt werden muß, so daß die Federeigenschaften auch für diese Befestigung herangezogen werden können.

Vorteilhafterweise ist der wenigstens eine Federschenkel als einen spitzen Winkel einschließendes L-Profilteil ausgebildet. Beim Einschieben der Sägezahnstanzteile, welche z.B. eine Ausnehmung mit einem 9o°-Winkel aufweisen, wird dann dieser eine Schenkel so aufgebogen, daß das Halteteil ebenfalls einen 9o°-Winkel aufweist, wobei dann die Federwirkung des Federschenkels wirksam wird.

Bei einer anderen Ausgestaltung ist vorgesehen, daß das Halteteil einen kreissegmentförmigen Ansatz aufweist. Diese Ausgestaltung ist insbesondere dort vorteilhaft, wo es auf eine flächige Anlage und vorteilhafte Einrasteigenschaften ankommt.

So ist es im Rahmen der Erfindung z.B. denkbar, daß zwei Halteelement mit kreissegmentförmigen Ansätzen parallel zueinander angeordnet sind. Die Federwirkung wird dadurch erreicht, daß die kreissegmentförmigen Ansätze gegenüber dem übrigen Halteteil elastisch deformiert werden und eine Klemmwirkung auf eine korrespondierend ausgebildete Anlagefläche einer Ausnehmung im Fuß der Sägezahnstanzteile ausüben.

Eine besonders günstige Weiterbildung dieser Ausgestaltung sieht vor, daß die Sägezahnsegmente von oben auf das wenigstens eine Halteteil aufsetzbar sind. Dies bedeutet, daß die Sägezahnstanzteile z.B. eine nach unten offene kreissegmentförmige Ausnehmung besitzen.

Bei einer anderen Ausgestaltung ist vorgesehen, daß die Ausnehmungen im Fußteil der Sägezahnstanzteile seitlich angeordnet sind. Dementsprechend müssen zur Befestigung derartiger Sägezahnstanzteile Halteteile vorgesehen werden, welche ein seitliches Eingreifen in diese Ausnehmungen ermöglichen. Derartige seitlich eingreifende Halteteile sind aus der EP-PS 91 986 an sich bekannt, wobei sie dort jedoch lediglich zur formschlüssigen Festlegung dienen. Eine elastische Deformation eines Federschenkels dieser Halteteile ist nicht vorgesehen.

Eine weitere Ausführungsform sieht vor, daß in einem Tragekörper korrespondierende Hinterschneidungen zu den Ausnehmungen im Fußteil des Sägezahnstanzteils vorgesehen sind, wobei das Halteteil als L-förmiges Winkelprofil derart ausgebildet ist, daß die Schenkel des Winkelprofils im eingesetzten Zustand verspannt werden und der Scheitel des Winkelprofils der oberen Seitenwand der Hinterschneidung des Tragekörpers anliegen. Durch diese Ausgestaltung werden die Schenkel einerseits gegen die untere Begrenzung der Hinterschneidung des Tragekörpers andererseits aber auch gegen die untere Begrenzung der Ausnehmung in den Sägezahnstanzteilen gedrückt, wodurch wiederum die Sägezahnstanzteile nach unten gegen das Trageteil gepreßt werden.

Weitere Merkmale, Vorteile und Einzelheiten der Erfindung ergeben sich aus der folgenden Beschreibung einiger bevorzugter Ausführungsformen anhand der Zeichnung. Dabei zeigen

Fig. 1 bis 7 jeweils einen schematischen Schnitt durch ein Sägezahnstanzteil, durch die verwendeten Halteteile und das jeweilige Trageteil, wobei die Fig. 1b bis 7b jeweils den Zustand von Halteteil und Trageteil ohne aufgesetzte Sägezahnstanzteile und die Fig. 1a bis 7a den Zustand mit aufgesetzten Sägezahnstanzteilen veranschaulichen, und

Fig. 8 eine schematische perspektivische Darstellung der Ausführungsform gemäß Fig. 1a eines durch Aneinanderreihung mehrerer Sägezahnstanzteile entstehenden Riegels.

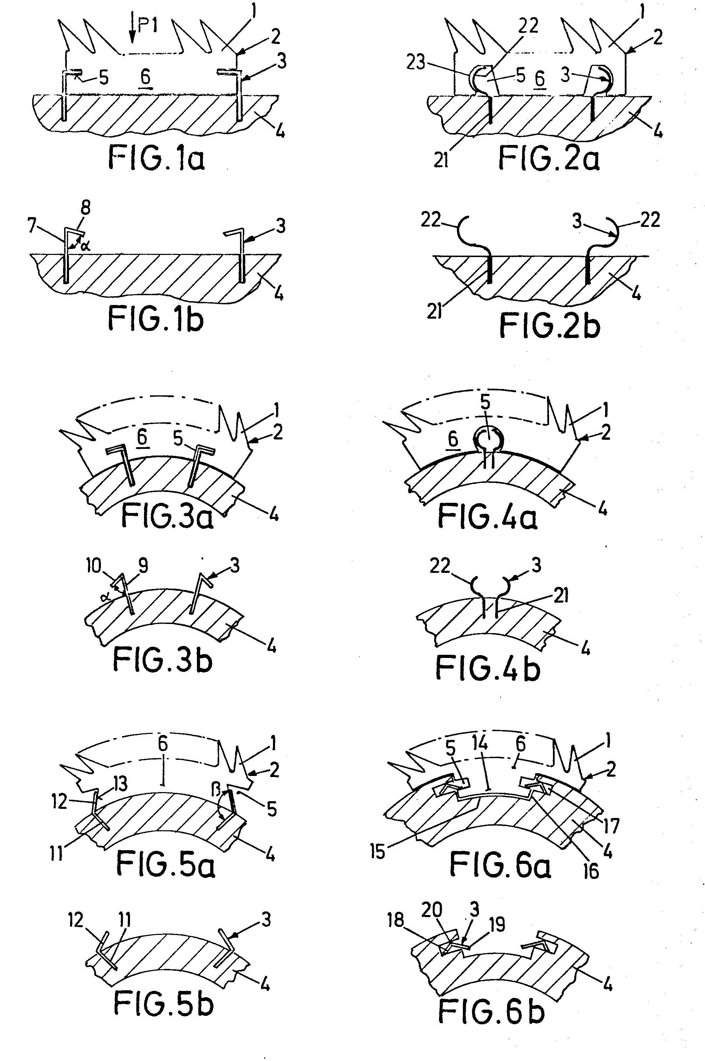

Eine erfindungsgemäße Vorrichtung zur Befestigung von Sägezahnstanzteilen kann bei textilen Vorbereitungsmaschinen ganz unterschiedlicher Art verwendet werden. Dabei können die Sägezahnstanzteile an einem Trageteil befestigt sein, welches seinerseits wieder an einem Grundkörper befestigt wird, oder der Grundkörper kann - wie in den in der Zeichnung dargestellten Ausführungsbeispielen - selbst als Tragekörper ausgebildet sein. Dabei sind in den Fig. 1 und 2 ebene Tragekörper, wie z.B. Kardendeckel, und in den Fig. 3 bis 7 walzenartige Tragekörper, wie z.B. Kämmwalzen, dargestellt.

Sämtlichen in der Zeichnung dargestellten Ausführungsformen ist gemeinsam, daß eine Mehrzahl von aneinandergereihten Sägezahnstanzteilen 1, welche auf diese Weise einen Riegel 2 ausbilden, über wenigstens ein Halteteil 3 mit einem Tragekörper 4 verbunden sind.

Dabei sind die Halteteile 3 mit dem Tragekörper in an sich bekannter Weise z.B. durch Kleben, Löten,

Nieten oder Schrauben verbunden, wobei vorzugsweise jeweils ein Schenkel der Halteteil 3 in einer entsprechenden Nut des Tragekörpers 4 ruht. Da diese Verbindung mit herkömmlichen Techniken bewerkstelligt wird, ist sie in der Zeichnung im einzelnen nicht dargestellt und beschrieben. In jedem Fall weist das Halteteil wenigstens einen frei über den Tragekörper 4 hinausstehenden Schenkel auf, der unter federelastischer Deformation in eine Ausnehmung 5 im Fuß 6 jedes Sägezahnstanzteils eingreift.

Bei der in Fig. 1 dargestellten Ausführungsform weisen die Halteteile 3 im Schnitt eine etwa L-förmige Grundform auf, wobei in dem in Fig. 1b dargestellten Grundzustand die beiden L-Schenkel 7 und 8 einen spitzen Winkel $\alpha$ einschließen. Beim Einsetzen der Sägezahnstanzteile 1 (vgl. Fig. 1a) wird dann der Schenkel 8 federelastisch so aufgebogen, daß er die Sägezahnstanzteile 1 in Richtung des Pfeiles P1 senkrecht nach unten gegen den Tragekörper 4 drückt. Der Schenkel 8 greift dabei in eine schlitzförmige, horizontal verlaufende Ausnehmung 5 der Sägezahnstanzteile 1 ein.

Zur Festlegung eines Riegels 2 aus einer Mehrzahl von Sägezahnstanzteilen 1 sind zwei Halteteile 3 im Abstand so voneinander angeordnet, daß der jeweilige Abstand der Schenkel 7 der Breite des Fußes 6 der Sägezahnstanzteile 1 entspricht.

Bei der in Fig. 3 dargestellten Ausführungsform sind die Halteteile 3 ebenfalls als L-förmige Winkelprofile ausgestaltet, wobei ein Schenkel 9 in einem zylindersep-

mentförmigen Tragekörper 4 angeordnet ist, während der andere Schenkel 1o sich in einem spitzen Winkel von dem Schenkel 9 wegerstreckt. Bei diesem Ausführungsbeispiel ist jedoch der Abstand der Schenkel 9 zueinander deutlich geringer als die Breite des Fußes 6 der Sägezahnstanzteile. Dementsprechend greifen die Feder-Schenkel 1o in den Fuß 6 der Sägezahnstanzteile 1 nicht von außen ein, sondern werden in korrespondierende, im Schnitt L-förmige Ausnehmungen 5 im Fuß 6 des Sägezahnstanzteils 1 eingeschoben.

Die in Fig. 5 dargestellte Ausführungsform umfaßt wiederum zwei Halteteile 3 zur Befestigung eines Riegels 2, deren Abstand im wesentlichen der Breite des Fußes 6 jedes Sägezahnstanzteils entspricht, wobei wiederum ein Schenkel 11 jedes Halteteils 3 in einem zylindersegmentförmigen Tragekörper 4 befestigt ist, während sich im Bereich der Oberfläche des Tragekörpers 4 der jeweils andere Schenkel 12 in stumpfem Winkel von dem anderen Schenkel 11 wegerstreckt, wobei die Schenkel 12 zweier einen Riegel 2 haltenden Halteteile 3 aufeinanderzu geneigt sind und beim Einschieben der Sägezahnstanzteile 1 (vgl. Fig. 5a) der Winkel $\beta$ zwischen den Schenkeln 11, 12 vergrößert wird. Die freien Schenkel 12 liegen dann einer Anlagefläche 13 einer von außen eingebrachten Ausnehmung 5 jedes Sägezahnstanzteils 1 an und drücken das Sägezahnstanzteil 1 nach unten auf den Tragekörper 4 zu.

Bei der in Fig. 6 dargestellten Ausführungsform weist der Fuß 6 jedes Sägezahnstanzteils 1 einen Ansatz 14 auf, der in eine längs verlaufende Ausnehmung 15 in dem Tragekörper 4 eingreift. Die Ausnehmungen 5 zur Aufnahme eines Halteteils 3 sind in dem Ansatz 14 als seitliche Schlitze ausgebildet, wobei in den Seitenwänden 16 der Ausnehmung 15 des Tragekörpers 4 korrespondierende schlitzartige Ausnehmungen 17 vorgesehen sind.

Die Halteteile 3 sind L-förmig ausgestaltet, wobei ein Schenkel 18 kürzer ist als der andere Schenkel 19. Ohne eingesetzte Sägezahnstanzteile 1 (vgl. Fig. 6b) liegt der eine Schenkel 18 dem Boden der Ausnehmung 17 an, während der Scheitelbereich 2o zwischen den Schenkeln 18, 19 der gegenüberliegenden Seitenwand der Ausnehmung 17 anliegt. Beim Einsetzen der Sägezahnstanzteile 1 (vgl. Fig. 6a) drückt der längere Schenkel 19 auf die untere Seitenwand der schlitzförmigen Ausnehmung 5, so daß das jeweilige Sägezahnstanzteil 6 federelastisch nach unten gegen den Tragekörper 4 gedrückt wird.

Bei der in Fig. 2 dargestellten Ausführungsform umfaßt das Halteteil 3 einen in dem Tragekörper 4 befestigten, im wesentlichen geraden Schenkel 21 sowie einen im Querschnitt kreissegmentförmigen Schenkel-Ansatz 22. Die Sägezahnstanzteile 1 sind mit Ausnehmungen 5 versehen, welche an ihrer Außenseite eine korrespondierende, kreissegmentförmige Anlagefläche 23 aufweisen. Zur Festlegung eines Riegels 2 von Sägezahnstanzteilen 1 sind zwei parallel zueinander angeordnete Halteteile 3 vorgesehen, deren Schenkel-Ansätze 22 sich in Blickrichtung zueinander öffnen. Die zur Halterung eines Riegels 2 von Sägezahnstanzteilen 1 vorgesehenen beiden Halteteile 3 weisen voneinander einen Abstand auf, welcher kleiner ist als die Breite des Fußes 6 der Sägezahnstanzteile 1. Die Ausnehmungen 5 in den Sägezahnstanzteilen 1 sind so dimensioniert, daß
die Sägezahnstanzteile 1 bzw. eine Mehrzahl derartiger,
zu einem Riegel 2 zusammengefaßter Sägezahnstanzteile 1
von oben auf die beiden Halteteile 3 aufgerastet
werden können. Durch die kreissegmentförmige Ausgestaltung des Schenkel-Ansatzes 22 werden diese beim Aufdrücken der Sägezahnstanzteile 1 nach innen gebogen
und liegen an der Anlagefläche 23 im aufgesetzten
Zustand (vgl. Fig. 2a) elastisch gegen die Anlageflächen 23 an.

Die Fig. 4 zeigt eine ganz ähnliche Ausführungsform
der Halteteile 3, wobei die Schenkel 21 zweier benachbarter Halteteile lediglich einen sehr geringen Abstand
voneinander aufweisen, so daß sie in lediglich eine
etwa kreisförmige Ausnehmung 5 im Fuß 6 der Sägezahnstanzteile 1 unter federnder Verbiegung aufeinanderzu
(vgl. Fig. 4a bzw. 4b) eingerastet werden können.

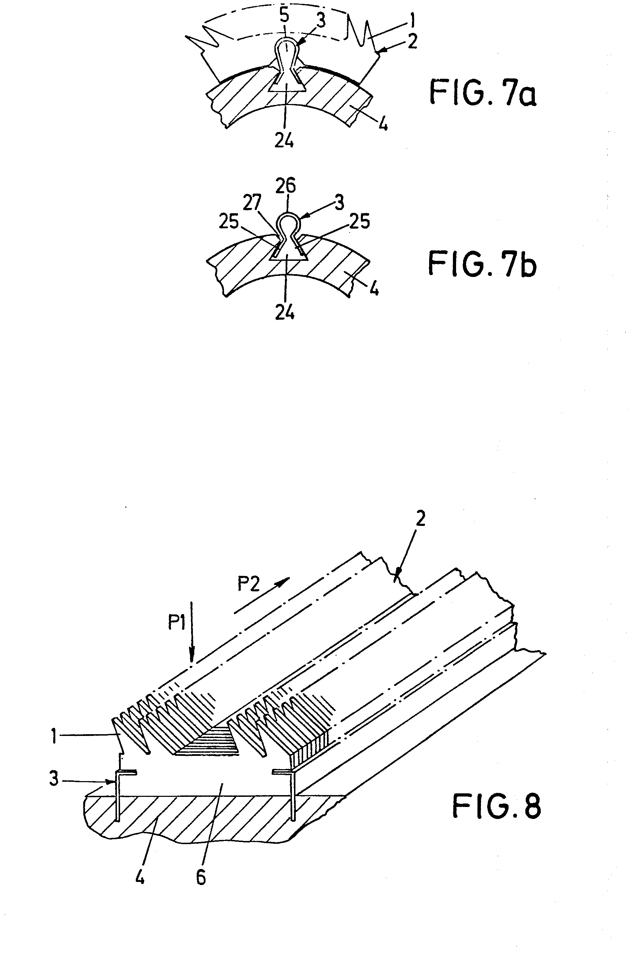

Bei der in Fig. 7 dargestellten Ausführungsform weist
der Tragekörper 4 eine Ausnehmung 24 auf, welche
sich zur offenen Oberseite hin verjüngt. Die Sägezahnstanzteile weisen eine sich ebenfalls zur Außenseite
hin verjüngende, etwa kreissegmentförmige Ausnehmung 5
auf. Zur Festlegung eines Riegels 2 von Sägezahnstanzteilen 1 dient ein einziges Halteteil 3, welches
zwei Schenkel 25 umfaßt, welche durch ein kreissegmentförmiges Kopfteil 26 verbunden sind. Das Halteteil 3
kann in der Ausnehmung 24 des Tragekörpers 4 dadurch
befestigt werden, daß die Schenkel 25 zusammengedrückt
und in die Ausnehmung 24 eingeführt werden, was durch
einen trichterartigen Einführbereich 27 erleichtert
wird. Im eingesetzten Zustand liegen die Schenkel 25
federnd an der Innenseite der Ausnehmung 24 an. Die Sägezahnstanzteile 1 können entweder auf das Kopfteil 26 aufgeschoben oder auf dieses unter elastischer Deformation desselben aufgerastet werden.

Durch sämtliche vorstehend beschriebene Ausführungsformen wird erreicht, daß ohne Verwendung zusätzlicher Festlegungsmittel und aufwendiger Werkzeuge die Sägezahnstanzteile 1 eines Riegels 2 sowohl in Längsrichtung (Pfeil P2) des Riegels 2 als auch in Richtung (Pfeil P1) senkrecht zu dem jeweiligen Tragekörper 4 sicher fixiert werden und sich andererseits zum Austausch einzelner Sägezahnstanzteile 1 oder eines ganzen Riegels 2 leicht lösen lassen.

P.a.t.e.n.t.a.n.s.p.r.ü.c.h.e

1. Vorrichtung zur Befestigung einer Mehrzahl unter Ausbildung eines Riegels nebeneinander angeordneter Sägezahnstanzteile auf einem Tragekörper einer textilen Vorbereitungsmaschine, wie Karden, Kratzen, Kämmwalzen od.dgl., wobei die Sägezahnstanzteile in Richtung senkrecht zur Längsrichtung des Riegels dadurch festgelegt sind, daß wenigstens ein in Längsrichtung des Riegels verlaufendes, mit dem Tragekörper verbundenes profiliertes Halteteil in eine korrespondierend profilierte Ausnehmung in einem Fußteil jedes Sägezahnstanzteils eingreift, dadurch gekennzeichnet, daß das Halteteil (3) wenigstens einen Federschenkel (5, 1o, 12, 19, 22, 25) derart aufweist, daß dieser beim Einsetzen in die Sägezahnstanzteile (1) bzw. in den Tragekörper (4) elastisch deformiert wird.

0253071

- 13 -

2. Vorrichtung nach Anspruch 1, <u>dadurch gekennzeichnet,</u> <u>daß</u> das wenigstens eine Halteteil ·(3) mit dem Tragekörper (4) durch Schrauben, Kleben, Nieten od.dgl. fest verbunden ist.

3. Vorrichtung nach Anspruch 1, <u>dadurch gekennzeichnet,</u> <u>daß</u> das wenigstens eine Halteteil (3) in eine Ausnehmung (24) des Tragekörpers (4) elastisch einrastbar ist.

4. Vorrichtung nach Anspruch 1, <u>dadurch gekennzeichnet,</u> <u>daß</u> der wenigstens eine Federschenkel (8, 1o) als in spitzem Winkel ($\alpha$) abgewinkelter Ansatz ausgebildet ist.

5. Vorrichtung nach Anspruch 1, <u>dadurch gekennzeichnet,</u> <u>daß</u> der wenigstens eine Federschenkel (22, 26) als kreissegmentförmiger Ansatz ausgebildet ist.

6. Vorrichtung nach Anspruch 5, <u>dadurch gekennzeichnet,</u> <u>daß</u> zwei Halteteile (3) mit kreisbogenförmigen Ansätzen (22) parallel zueinander, dicht nebeneinander angeordnet sind.

7. Vorrichtung nach Anspruch 5, <u>dadurch gekennzeichnet,</u> <u>daß</u> die Sägezahnstanzteile (1) von oben auf das wenigstens eine Halteteil (3) aufrastbar sind.

8. Vorrichtung nach Anspruch 1, <u>dadurch gekennzeichnet,</u> <u>daß</u> die Ausnehmung (3) in dem Fußteil (6) der Sägezahnstanzteile (1) seitlich angeordnet ist.

9. Vorrichtung nach Anspruch 8, dadurch gekennzeichnet, daß in dem Tragekörper (4) korrespondierende Hinterschneidungen (17) entsprechend den Ausnehmungen (5) in dem Fuß (6) der Sägezahnstanzteile (1) vorgesehen sind, wobei das Halteteil (3) als L-förmiges Winkelprofil derart ausgebildet ist, daß die Schenkel (18, 19) des Winkelprofils im eingesetzten Zustand verspannt werden und der Scheitel (2o) des Winkelprofils der oberen Seitenwand der Ausnehmung (17) des Tragekörpers (4) anliegt.

1/2  0253071

FIG.1a

FIG.2a

FIG.1b

FIG.2b

FIG.3a

FIG.4a

FIG.3b

FIG.4b

FIG.5a

FIG.6a

FIG.5b

FIG.6b

0253071

FIG. 7a

FIG. 7b

FIG. 8